**Europäisches Patentamt**

**European Patent Office**

**Office européen des brevets**

(19)

(11) Veröffentlichungsnummer : **0 171 115**
**B1**

(12)

# EUROPÄISCHE PATENTSCHRIFT

(45) Veröffentlichungstag der Patentschrift :
23.12.87

(51) Int. Cl.⁴ : **B 65 G 69/18**

(21) Anmeldenummer : **85201205.3**

(22) Anmeldetag : **18.07.85**

(54) **Vorrichtung für die emissionsfreie bzw. -arme Beschickung von Lagerbehältern mit staubenden Schüttgütern.**

(30) Priorität : **01.08.84 DE 3428278**

(43) Veröffentlichungstag der Anmeldung :
**12.02.86 Patentblatt 86/07**

(45) Bekanntmachung des Hinweises auf die Patenterteilung : **23.12.87 Patentblatt 87/52**

(84) Benannte Vertragsstaaten :
**AT BE CH DE FR GB IT LI LU NL SE**

(56) Entgegenhaltungen :
**EP-A- 0 098 586**
**DE-C- 501 934**
**FR-A- 718 133**
**FR-A- 2 534 892**

(73) Patentinhaber : **NORDDEUTSCHE AFFINERIE AG**
**Alsterterrasse 2**
**D-2000 Hamburg 36 (DE)**

(72) Erfinder : **Schummer, Anton**
**Hellwiegstrasse 83**
**D-2000 Hamburg 20 (DE)**
Erfinder : **Hansen, Uwe-Jens**
**Auf der Bojewiese 35**
**D-2050 Hamburg 80 (DE)**
Erfinder : **Bartels, Jürgen**
**Am Dillsbach 11**
**D-2117 Tostedt (DE)**

(74) Vertreter : **Rieger, Harald, Dr.**
**Reuterweg 14**
**D-6000 Frankfurt am Main (DE)**

**Beschreibung**

Die Erfindung betrifft eine Vorrichtung für die emissionsfreie bzw. -arme Beschickung von Lagerbehältern mit staubenden Schüttgütern.

Beim Befüllen von Behältern, wie Bunkern mit trockenen, Feinanteile enthaltenden Schüttgütern mittels Greiferkränen werden im allgemeinen große Mengen Staub mit der aus dem Behälter verdrängten und nach oben entweichenden Luft in die Umwelt befördert. Es sind daher bereits Maßnahmen bekanntgeworden, um die Nachteile der Staubbelästigung in der Umwelt zu vermeiden.

Aus DE-OS 25 25 703 ist eine Vorrichtung zum Entstauben einer Annahmegosse für Schüttgüter bekannt, bei der die Einfüllöffnung der trichterförmigen Annahmegosse durch Schwenkklappen im wesentlichen geschlossen wird. Das auf die Schwenkklappen gegebene staubhaltige Schüttgut, insbesondere Getreide, wird in der Weise in den Trichter eingebracht, indem die Federkraft der Schwenkklappen durch das Eigengewicht des Schüttgutes überwunden wird. Im trichterförmigen Raum wird ein Unterdruck erzeugt. Eine ähnlich gestaltete Staubrückhaltevorrichtung ist auch aus EP-A-15 651 bekannt. Die vorbekannte Staubrückhaltevorrichtung für Behälter etc. enthält mehrere Öffnungen mit jeweils einem Restriktor. Beim Beladen öffnet sich ein Restriktor unabhängig von den anderen Restriktoren, wenn eine bestimmte Menge Ladegut erreicht ist. Anschließend schließt sich der Restriktor durch Federkraft oder Gegengewicht wieder. Gegebenenfalls kann auch noch eine leichte Staubabsaugung am Trichter vorgenommen werden.

Die Federkräfte bzw. Gegengewichte in den vorbekannten Systemen können in Anpassung an die Klappensysteme klein gehalten werden, da nur die Schüttgut-freien und unbelasteten Klappen in die Ausgangsstellung (Behälterverschluß) zurückgestellt werden müssen. Jedoch wird bei derartigen Systemen das mit den Klappen in Berührung gebrachte staubende Schüttgut sofort unter Überwindung der leichten Federkraft in den Behälter entleert und ein erhebliche Mengen Staub enthaltendes Verdrängungsvolumen erzeugt.

Die aus EP-A1-98 586 bekannte Anlage betrifft eine Vorrichtung zum Beschicken eines Reaktors mit thermisch zu behandelndem Gut, insbesondere Abfällen. In der vorbekannten Vorrichtung wird ein mit einem schwenkbaren Deckel versehener Schüttbehälter mit dem zu verarbeitenden Gut gefüllt und dieses aus dem Schüttbehälter über am Boden befindliche Schwenkklappen in einen Füllbehälter eingelassen.

Der Erfindung liegt die Aufgabe zugrunde, das Befüllen von Behältern, insbesondere bunkerförmigen Behältern, mit staubenden Schüttgütern, beispielsweise Erzkonzentraten, die mittels Greiferkräne angedient werden, in der Weise vorzusehen, daß während des Befüllungsvorganges praktisch kein offener Querschnitt vorhanden ist und praktisch keine oder nur äußerst geringe Mengen staubhaltiger Luft austreten können.

Die Erfindung löst diese Aufgabe mit einer Vorrichtung der eingangs genannten Art. Demgemäß wird eine Vorrichtung für die emissionsfreie bzw. -arme Beschickung eines Lagerbehälters (1) mit staubendem Schüttgut, mit unterhalb eines Gitterrostes (6) angeordneten Schwenkklappen (2), die die obere Behälteröffnung schließen bzw. freigeben, und mit einer Absaugvorrichtung (7) an der oberen Behälteröffnung, gemäß der Erfindung in der Weise ausgestaltet, daß die Schwenkklappen (2) über mechanische Mittel (5) einzeln oder in Gruppen zwangsgesteuert sind, daß die Absaugvorrichtung (7) den oberen Behälterrand umgreift und daß an der oberen Eintragsöffnung ein verfahrbarer, Behälter (1) und Absaugvorrichtung (7) abdichtender Deckel (9) vorgesehen ist.

Vorteilhaft ist die Anordnung der Absaugvorrichtung direkt oberhalb der Schwenkklappen, da so auch mögliche Emissionen während des Ablegvorganges auf den Klappen mit erfaßt werden können.

Durch die über mechanische Mittel zwangsgesteuerten Klappen wird erreicht, daß die während des Ablaßvorgangs des Schüttgutes von den Klappen in das Behälterinnere sich bildenden Spalten zwischen den Klappen möglichst lange vom Schüttgut bzw. von einer langsam geringer werdenden Schichtdicke bedeckt bleiben. Mittels dieser gezielten Klappensteuerung wird die freie Fläche, durch welche staubbeladene Luft austreten kann, so klein wie möglich gehalten. Auf diese Weise wird gleichzeitig erreicht, daß das Absaugevolumen nur noch etwa 1/8 bis 1/10 desjenigen Absaugevolumens beträgt, das bei einer direkten Bunkerbeschickung durch direkte Entleerung des Greiferkranes in den Behälter aufgefangen bzw. abgesaugt werden muß.

Der oberhalb des Klappensystems über den gesamten Behälterdurchmesser angebrachte Gitterrost dient der Absiebung sowie der Vergleichmäßigung der Schüttung.

Die Zwangssteuerung des Klappensystems wird zweckmäßig mit hydraulischen Mitteln vorgenommen. Dabei können die Klappen einzeln und in Gruppen betätigt werden, je nach Beschaffenheit und Böschung des staubenden Schüttgutes.

Geeignete hydraulische Mittel sind Hydraulikzylinder, pneumatische Zylinder, Hydraulikmotoren sowie Schwenkmotoren. Es können aber auch andere mechanische Mittel vorgesehen werden, beispielsweise Elektromotoren.

Nach einer besonders vorteilhaften Ausgestaltung der Erfindung weist die Vorrichtung zwei bunkerförmige Behälter auf. Diese Behälter von insbesondere gleichen Abmessungen sind unmittelbar nebeneinander angeordnet. Jeder Behälter besitzt über mechanische Mittel zwangsgesteuerte Schwenkklappen sowie eine den oberen Behälterrand umgreifende Absaugevorrichtung. Des weiteren ist jeder bunkerförmige Behälter der erfindungsgemäßen Vorrichtung mit einer Wiegeeinrichtung ausgerüstet. Bei der vorteilhaften Ausgestaltung der erfindungsgemäßen Vorrichtung mit zwei bunkerförmigen Behältern ist lediglich ein verfahrbarer Deckel für die Abdichtung angeordnet. Dabei ist dieser Deckel wechselseitig verfahrbar. Diese Anordnung erlaubt eine rationelle Arbeitsweise, bei der während der Ablagerung des Schüttgutes auf dem Schwenkklappensystem des einen Behälters in dem anderen mit dem wechselseitig verfahrbaren Deckel abgedichteten Bunker der Ablaßvorgang des Schüttgutes in den Bunkerraum erfolgt. Die Wiegeeinrichtung ermöglicht darüber hinaus eine genaue Erfassung der Umschlagleistung.

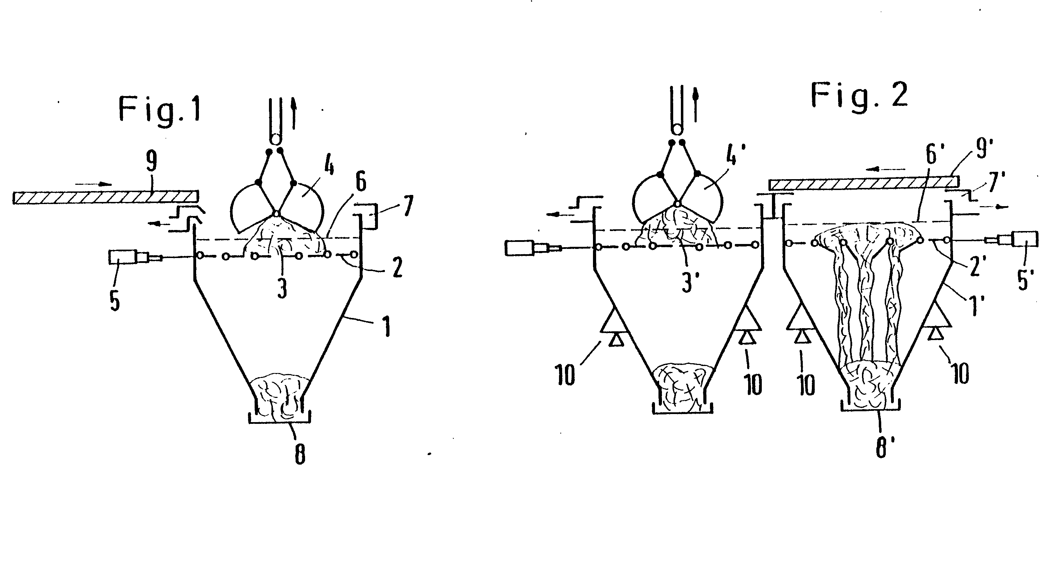

In den Figuren 1 und 2 ist die Erfindung anhand einer schematischen Darstellung veranschaulicht.

Fig. 1 zeigt in einer Seitenansicht einen bunkerförmigen Behälter 1, auf dessen Schwenkklappen 2 staubendes Schüttgut 3 aus dem Greiferkran 4 abgelegt ist. 5 ist das mechanische Mittel zur Zwangsbetätigung der Schwenkklappen. Mit 6 ist ein Gitterrost bezeichnet. Eine Absaugevorrichtung 7 umgreift den oberen Behälterrand. Die Auslaßvorrichtung des Bunkers ist mit 8 bezeichnet. 9 ist ein verfahrbarer Deckel.

Fig. 2 zeigt in einer Seitenansicht zwei bunkerförmige, unmittelbar nebeneinander angeordnete Behälter. Die Bezugszeichen 1' bis 9' der Fig. 2 entsprechen den Bezugszeichen 1 bis 9 für die Gegenstände der Fig. 1. Mit 10 sind die Wiegeeinrichtungen (Wiegebunker) dargestellt.

Die Vorteile der Vorrichtung der Erfindung sind darin zu sehen, daß in ebenso einfacher wie wirtschaftlicher Weise und mit hinsichtlich Absaugevorrichtung und Schwenkklappensystem relativ geringem apparativem Aufwand eine die Umwelt nicht belastende, praktisch staubfreie Bunkerfüllung ermöglicht wird. Das zwangsgesteuerte Schwenkklappensystem ermöglicht eine Anpassung an die jeweiligen Fließeigenschaften des Schüttgutes.

**Patentansprüche**

1. Vorrichtung für die emissionsfreie bzw. -arme Beschickung eines Lagerbehälters (1) mit staubendem Schüttgut, mit unterhalb eines Gitterrostes (6) angeordneten Schwenkklappen (2), die die obere Behälteröffnung schließen bzw. freigeben, und mit einer Absaugvorrichtung (7) an der oberen Behälteröffnung, dadurch gekennzeichnet, daß die Schwenkklappen (2) über mechanische Mittel (5) einzeln oder in Gruppen zwangsgesteuert sind, daß die Absaugvorrichtung (7) den oberen Behälterrand umgreift und daß an der oberen Eintragsöffnung ein verfahrbarer, Behälter (1) und Absaugvorrichtung (7) abdichtender Deckel (9) vorgesehen ist.

2. Vorrichtung nach Anspruch 1, dadurch gekennzeichnet, daß die Schwenkklappen über hydraulische Mittel zwangsgesteuert sind.

3. Vorrichtung nach den Ansprüchen 1 und 2, dadurch gekennzeichnet, daß die Schwenkklappen über Hydraulikzylinder gesteuert sind.

4. Vorrichtung nach den Ansprüchen 1 und 2, dadurch gekennzeichnet, daß die Schwenkklappen über Hydraulikmotoren gesteuert sind.

5. Unmittelbar nebeneinander liegende Doppelanordnung einer Vorrichtung nach einem der Ansprüche 1 bis 4, dadurch gekennzeichnet, daß nur ein einziger, wechselseitig verfahrbarer Deckel (9') und eine Wiegeeinrichtung (10) vorgesehen sind.

**Claims**

1. Apparatus for charging a storage container (1) with dust-raising bulk material in such a manner that no emission or only a low emission results, comprising hinged flaps (2), which are disposed below a gridlike grate (6) and close and open the top opening of the container, and a suction device (7) provided at the top opening of the container, characterized in that the hinged flaps (2) are positively controlled individually or in groups by mechanical means (5), the suction device (7) embraces the too rim of the container, and a movable cover (9) for sealing the container (1) and the suction device (7) is provided at the top charging opening.

2. Apparatus according to claim 1, characterized in that the hinged flaps are positively controlled by hydraulic means.

3. Apparatus according to claims 1 and 2, characterized in that the hinged flaps are controlled by hydraulic cylinders.

4. Apparatus according to claims 1 and 2, characterized in that the hinged flaps are controlled by hydraulic motors.

5. An arrangement comprising two closely juxtapqsed apparatuses according to any of claims 1 to 4, characterized in that a single cover (9') is provided, which is movable to alternative closing positions, and a weighing device (10) is provided.

**Revendications**

1. Dispositif pour charger un réservoir (1) sans émission de poussière ou avec peu d'émission de poussière de produits en vrac poussiéreux, comprenant des volets basculants disposés en dessous d'une grille (6) et fermant ou dégageant l'ouverture supérieure du réservoir, et un dispositif d'aspiration (7) monté sur l'ouverture supérieure du réservoir, caractérisé en ce que les volets basculants (2) sont commandés positivement, individuellement ou en groupe par des moyens mécaniques (5), en ce que le dispositif d'aspiration entoure le bord supérieur du réservoir, et en ce que sur l'ouverture supérieure d'entrée est prévu un couvercle (9) mobile rendant étanche le réservoir (1) et le dispositif d'aspiration (7).

2. Dispositif suivant la revendication 1, caractérisé en ce que les volets basculants sont commandés positivement par des moyens hydrauliques.

3. Dispositif suivant les revendications 1 et 2, caractérisé en ce que les volets basculants sont commandés par un vérin hydraulique.

4. Dispositif suivant les revendications 1 et 2, caractérisé en ce que les volets basculants sont commandés par des moteurs hydrauliques.

5. Agencement jumelé directement côte à côte d'un dispositif suivant les revendications 1 à 4, caractérisé en ce qu'il n'est prévu qu'un seul couvercle (9') mobile alternativement et qu'un seul dispositif de pesée (10).

Fig. 1

Fig. 2